# EUROPEAN PATENT SPECIFICATION

(11) **EP 1 582 081 B1**
(45) Date of publication and mention of the grant of the patent: **26.03.2008**
(21) Application number: 03701192.1
(22) Date of filing: 10.01.2003
(51) Int. Cl.: H04Q 7/38

(54) **SINGLE SIGN-ON FOR USERS OF A PACKET RADIO NETWORK ROAMING IN A MULTINATIONAL OPERATOR NETWORK**
SINGLE SIGN-ON (SSO) FÜR BENUTZER VON PAKETFUNKNETZ-ROAMING IN EINEM MULTINATIONALEN BETREIBERNETZ
OUVERTURE UNIQUE POUR UTILISATEURS DE RESEAU RADIO PAR PAQUETS SE DEPLACANT DANS UN RESEAU D'OPERATEUR MULTINATIONAL

(43) Date of publication of application: 05.10.2005
(73) Proprietor: TELEFONAKTIEBOLAGET LM ERICSSON (publ), 164 83 Stockholm (SE)
(72) Inventor: de GREGORIO, Jesus, Angel, E-28660 Boadilla del Monte-Madrid (ES); BARRIGA, Luis, SE-12833 Skarpnäck (SE); PARDO-BLAZQUEZ, Avelina, E-28012 Madrid (ES); WALKER-PINA, John, Michael, E-28045 Madrid (ES)
(74) Representative: Pfeifer, Torsten
(86) International application number: PCT/SE2003/000024
(87) International publication number: WO 2004/064442

(56) References cited:
- EP-A- 0 037 069
- WO-A-01/65872
- US-A1- 2003 083 067

## Description

### FIELD OF THE INVENTION

The present invention generally relates to Single Sign-On services for a plurality of users accessing a service network via Internet through a packet radio network. More particularly, the invention relates to a telecommunication system and a method for providing Single Sign-On services to users of a Service Network owned by a multinational network operator through a packet radio network where the users are roaming.

### BACKGROUND

Single Sign-On (hereinafter SSO) is an emerging principle that enables users to access different services without explicitly authenticating such users for each particular different service. The support of this principle implies in the Internet world that a user provides an identity with a password only once at a given Identity Provider and the resulting authentication is valid for entrance to other services or Service Providers. However, in the mobile world, the SSO principle additionally implies that once a user has been authenticated in an access network, such user gets access to services in a home network wherein the user holds a subscription without any further explicit authentication.

During the last years some Mobile Network Operators (hereinafter MNO) have expanded their international presence by taking over local country operators and by acquiring licenses to operate new markets in different countries. Hence, such operators have become Multinational Mobile Network Operators, each particular Multinational Mobile Network Operator (MN-MNO) comprising a number of local companies, namely a number of National Network Operators (N-MNO), distributed through different countries.

Thus, two different scenarios, accompanied by respective business models, may turn up as natural evolutions of how a Multinational Mobile Network Operator (MN-MNO) may operate its Multinational network. In a first scenario, the Multinational Mobile Network Operator (MN-MNO) operates in such a manner that each individual National Network Operator (N-MNO) maintains its local brand and independence in a so-called loosely-coupled model, whereas in a second scenario, the Multinational Mobile Network Operator (MN-MNO) operates in a manner such as to maintain a single common brand and a common user experience across the whole network operated by distributed National Network Operators (N-MNO) through different countries, in a so-called tightly-coupled model.

Under the tightly-coupled model, there is a need for offering global services or, in other words, common services offered to subscribers of a Multinational Mobile Network Operator (MN-MNO) irrespective of the particular National Network Operators (N-MNO) where such subscribers hold individual subscriptions, whilst each particular National Network Operator may still provide particular services within its particular national network. However, under the loosely-coupled model, all National Network Operators (N-MNO) included in a Multinational Mobile Network Operator (MN-MNO) have a similar authority and responsibility, being independent from each other, and hence there is not a clear place in the network for offering global or common services.

Thereby, a tightly-coupled Multinational Mobile Network Operator (MN-MNO) may thus have interest in unifying users' experiences while roaming through networks of its different National Network Operators, and such users try to access and make use of services in a seamless manner, and with a common look and perception of applicable authentication mechanisms, which desirably are as much transparent as possible. A general assumption under this model is that a Service Level Agreement (SLA) is always signed between a Multinational Mobile Network Operator (MN-MNO) and a 3^{rd} party Service Provider (SP), and not between a Service Provider (SP) and each individual National Network Operator included in the Multinational Mobile Network Operator (MN-MNO), so that all the users of the Multinational Mobile Network Operator (MN-MNO) are qualified to access to this Service Provider (SP). Nowadays, this tightly-coupled Multinational Mobile Network Operator (MN-MNO) model seems to be gaining more and more acceptance between large Multinational Mobile Network Operators.

Regarding Single Sign-On (SSO) services, there is an industry forum known as Liberty Alliance Project (LAP) that has developed a set of protocols to allow scenarios supporting Single Sign-On (SSO) services between several business entities, said business entities acting either as an Identity Provider (IdP) or as a Service Provider (SP). This way allows an SP and an IdP to provide a user with SSO facilities when accessing to different services in the Internet. The SP and the IdP are assumed to have signed a bilateral agreement in advance, thus forming a so-called Federation. This industry forum does not specify any particular authentication mechanism, but just how the authentication context may be transferred from an Identity Provider (IdP) to a Service Provider (SP), the latter finally serving services to end users. Moreover, the Liberty Alliance Project does not dictate how an IdP works internally and the possible interactions between the different National Network Operators. Thus, solutions regarding SSO when users are roaming among the different National Network Operators within a Multinational Mobile Network Operator (MN-MNO) are out of the scope of the Liberty Alliance Project.

Regarding roaming of subscribers in a packet radio network like a General Packet Radio Service (GPRS) network, several scenarios turn up depending on the location of a Gateway GPRS Support Node (GGSN) assigned for providing connectivity with a Service Provider network, said GGSN being preferably located at a border between a Core Network (CN) domain and a Service Network (SN) domain.

In a first conventional scenario, the assigned Gateway GPRS Support Node (GGSN) belongs to the home network. For instance, there is currently a so-called 'walled garden' scenario, wherein a user is always connected to a home Service Network through a General Packet Radio Service (GPRS) access network, which belongs to a home National Network Operator (N-MNO). In this 'walled garden' scenario, the support for Single Sign-On (SSO) services is based on a so-called 'MSISDN forwarding' mechanism, wherein MSISDN traditionally stands for Mobile Subscriber ISDN Number though, in a broader sense, it can be assumed as a subscriber directory number. Briefly described, the 'MSISDN forwarding' mechanism is initiated from a Home Gateway GPRS Support Node (H-GGSN) in a home Core Network domain by sending a RADIUS Access Request message that includes an MSISDN and an IP address for a user toward a 'Home Authentication, Authorization and Accounting' (H-AAA) server in the Home Service Network domain. This information allows the H-AAA server to create a master session for the user so that whenever said user requests access to a service, the master session is checked to confirm that the user is already properly authenticated. More particularly, the international application with publication number WO 01/67716 A1 describes an 'MSISDN forwarding' mechanism based on the sending of a RADIUS Accounting Start message toward a Wireless Application Protocol (WAP) Gateway within a 'walled garden SSO' scenario that can be considered a closest art of this invention.

In a second scenario, the assigned Gateway GPRS Support Node (GGSN) belongs to a visited network where a user is roaming. Such visited network is preferably in charge of performing the user access authentication. Therefore, the assigned Visited Gateway GPRS Support Node (V-GGSN) in the visited Core Network domain may directly contact with the 'Home Authentication, Authorization and Accounting' (H-AAA) server in the Home Service Network by making use of the above 'MSISDN forwarding' mechanism. A method for controlling a wireless roaming call is described in WO 01/65872 A1 (NATIONAL TELEMANAGEMENT CORPORATION) 07.09.2001.

Thus, in both scenarios commented above, IP traffic generated by a user is physically routed towards the home Service Network (SN) of said user. This routing of user IP traffic through the home Service Network is not efficient when the user wants to access local services offered by a given visited National Network Operator (N-MNO) under a Multinational Mobile Network Operator (MN-MNO) umbrella, as well as to access global services offered by said Multinational Mobile Network Operator (MN-MNO) to subscribers roaming in any visited National Network Operator (N-MNO) organised according to the above tightly-coupled model. Moreover, this lack of efficiency is even more significant when said global services are actually executed in such Visited Service Network of a particular National Network Operator (N-MNO) where the user is roaming.

Moreover, even though there are several solutions at present to provide GPRS roaming, none of them provides all the architectural means needed to fulfil the requirements for an effective support of Single Sign-On (SSO) services when a user is roaming in a packet radio network of a Multinational Mobile Network Operator (MN-MNO) that follows a tightly-coupled model.

Thereby, it is an object of the present invention to provide means and method for offering a user the possibility to access services in a Multinational Mobile Network Operator (MN-MNO) Service Network as well as in external Service Providers having signed bilateral agreements with said MN-MNO, the users without having to be explicitly authenticated each time a service is invoked, and the Service Network trusting an original authentication performed when the user gained a first access to the GPRS Core Network.

It is another object of the present invention that such access based authentication is trusted even when the user is roaming among the different National Network Operator (N-MNO) that compose said MN-MNO thus allowing Single Sign-On (SSO) services for subscribers roaming in a packet radio network.

Moreover, it is a further object of the present invention to provide means and method for routing the user IP traffic through a visited Service Network where the user is roaming and thus allowing the user to access and execute Single Sign-On global and local services offered by said visited National Network Operator (N-MNO) under a Multinational Mobile Network Operator (MN-MNO) organised according to the above tightly-coupled model.

### SUMMARY OF THE INVENTION

The above objects, among others, are accomplished in accordance with the invention by the provision of a telecommunication system and a method for providing Single Sign-On services for a user (3) roaming in a packet radio network (CN-1, SN-1; CN-2, SN-2) of a Multinational Mobile Network Operator (MN-MNO) that includes a federation of National Network Operators (N-MNO-A; N-MNO-B), one of these National Network Operators (N-MNO-A) holding the user's subscription.

Thus, the telecommunications system in accordance with the invention comprises:
- a visited Gateway GPRS Support Node (V-GGSN) (14) assigned for the user at a visited packet radio network (CN-1) wherein the user is roaming, and for the purpose of the invention this V-GGSN is responsible for sending user's identifiers relevant for a first authentication of the user toward the user's home network;
- a home Authentication, Authorization and Accounting (H-AAA) server (23) in the user's home service network (SN-2), responsible for maintaining a master session for the user with said user's identifiers;
- a visited Authentication, Authorization and Accounting (V-AAA) server (13) in the visited network (SN-1), which acts as a proxy between the V-GGSN (14) and the H-AAA (23), and is responsible for binding an H-AAA address with said user's identifiers; and
- a global Single Sign-On Front End (G-SSO-FE) infrastructure (33) intended to act as a single entry point for Single Sign-On service in the federation of National Network Operators (N-MNO-A; N-MNO-B).

This telecommunications system may also comprise a Global Directory (31) of the federation of National Network Operators (N-MNO-A, N-MNO-B) for cooperation with the V-AAA server (13) in the visited network (SN-1), wherein the user is roaming, to locate the H-AAA server (23) in the user's home service network (SN-2). This Global Directory (31) is an entity arranged for storing an association between user's identifiers relevant for user's authentication, and an address of a corresponding H-AAA server (23).

In this telecommunications system, the V-AAA server (13) in the visited network (SN-1), wherein the user is roaming, keeps a binding of an H-AAA server (23) address and user's identifiers within a Local Dynamic Routing Database (LDR DB) (11). In this respect, the above user's identifiers comprise a user directory number and an IP address assigned to the user (UE) (3).

Also in this telecommunications system, the H-AAA server (23) in the user's home service network (SN-2) maintains a master session for the user in cooperation with a Single Sign-On Session Database (SSO Session DB) (21) responsible for storing session related information. This session related information may comprise a user directory number, an IP address assigned to the user, an indicator of a selected authentication mechanism, and a timestamp of the authentication event.

This telecommunications system further comprises a number of Service Providers (2) that have signed service agreements with the federation of National Network Operators (N-MNO-A, N-MNO-B) for offering Single Sign-On services to users that are subscribers of any National Network Operator (N-MNO-A; N-MNO-B) included in the federation of National Network Operators (N-MNO-A, N-MNO-B). Thus, each Service Provider (2) comprises:
- means for redirecting a user to a global Single Sign-On Front End (G-SSO-FE) infrastructure (33) as entry point in the federation of National Network Operators (N-MNO-A, N-MNO-B);
- means for receiving a token from the user, the token being either an authentication assertion, or a reference thereof along with an indication of where such assertion was generated;
- means for retrieving an assertion from a site where the assertion was generated; and
- means for checking that such site is trusted.

Each particular Service Provider (2) may have in this telecommunications system a different global Single Sign-On Front End (G-SSO-FE) (33) for acting as entry point in the federation. In this respect, means are provided for changing from one global Single Sign-On Front End to one another within the federation of National Network Operators (N-MNO-A, N-MNO-B) for acting as entry point in said federation of National Network Operators (N-MNO-A, N-MNO-B).

Thus, the method in accordance with the invention comprises:
- a first step of performing a first authentication of a user, who is roaming in a visited packet radio network (CN-1, SN-1), toward the user's home service network (SN-2);
- a second step of creating a master session at the user's home service network (SN-2) with Single Sign-On related data;
- a third step of redirecting the user, who access a Service Provider (2) that has a service agreement with the Multinational Mobile Network Operator (MN-MNO), toward the user's home network (N-MNO-A) via a global Single Sign-On Front End (G-SSO-FE) infrastructure (33) acting as entry point in the federation of National Network Operators (N-MNO-A; N-MNO-B) for obtaining a Single Sign-On authentication assertion; and
- a fourth step of receiving a Single Sign-On authentication assertion either from the user or from an entity where such assertion was generated.

In this method, the second step introduced above of creating a master session at the user's home service network (SN-2) with Single Sign-On related data further includes the steps of:
- storing at a Single Sign-On Session Database (21) Single Sign-On related data comprising a session identifier, a session status, a user directory number, an IP address assigned to the user, an indicator of a selected authentication mechanism, and a timestamp of the authentication event; and
- binding at a user's visited service network (SN-1) an address of an entity handling the master session for such user at the user's home service network (SN-2), and a set of user's identifiers that includes at least a user directory number, and an IP address assigned to the user (3).

In this method, the fist step of performing a first authentication of a user roaming in a visited packet radio network (CN-1) assumes that a visited Gateway GPRS Support Node (V-GGSN) (14) has been assigned for the user at the visited packet radio network and that user's identifiers relevant for a first user's authentication are sent from said V-GGSN (14) toward a home Authentication, Authorization and Accounting (H-AAA) server (23) in the user's home service network (SN-2) for maintaining a user's master session. For this purpose, this first step of performing a first authentication of the user also includes a step of interposing a visited Authentication, Authorization and Accounting server (V-AAA) (13) in the visited network (SN-1), said V-AAA thus acting as a proxy between said V-GGSN (14) in the visited packet radio network and the H-AAA server (23) in the user's home network (SN-2).

In this method the third step of redirecting a user toward the user's home network (N-MNO-A) via a global Single Sign-On Front End (G-SSO-FE) infrastructure (33) may preferably comprise the steps of:
- determining a visited network (N-MNO-B) which assigned the current IP address to the user when accessing a network of the federation of National Network Operators (N-MNO-A, N-MNO-B); and
- obtaining from the visited network (N-MNO-B) an address of an entity handling a user's master session in the user's home service network (SN-2).

In particular the above step of obtaining an address of an entity handling the master session for such user may be carried out either by redirecting (S-54, S-55) the user toward the currently visited network (N-MNO-B), or by requesting such address from the global Single Sign-On Front End (33) toward the visited network (N-MNO-B) with help of a Back-End protocol (S-90).

Also in particular, the above step of determining the visited network (N-MNO-B) may include a step of querying a Global Directory (31) about the National Network Operator in charge of assigning a given user's IP address.

More precisely, the above fourth step in this method of receiving a Single Sign-On authentication assertion from the entity where such assertion was generated includes the steps of:
- receiving from the user a reference to said assertion along with an address of such entity; and
- validating the assertion with the entity having generated the assertion.

### BRIEF DESCRIPTION OF DRAWINGS

The features, objects and advantages of the invention will become apparent by reading this description in conjunction with the accompanying drawings, in which:

**FIG. 1** illustrates a basic overview of the different players and interfaces involved in a tightly-coupled scenario having a Multinational Mobile Network Operator (MN-MNO) that comprises a number of National Network Operator (SN-1, CN-1; SN-2, CN-2).

**FIG. 2** presents a flow sequence describing the interactions between the different entities involved as carrying out an effective Single Sign-On authentication for users of a packet radio network roaming in a network of a Multinational Mobile Network Operator (MN-MNO) that comprises a number of National Network Operator (SN-1, CN-1; SN-2, CN-2) wherein said users hold their subscription.

**FIG. 3** shows a simplified view of different players and interactions for supporting Federated Single Sign-On services in a tightly-coupled scenario having a Multinational Mobile Network Operator (MN-MNO).

**Fig. 4** shows an overview of the traffic flow followed between a user, a Service Provider having a service agreement with a Multinational Mobile Network Operator, and a federation of National Network Operators included in said Multinational Mobile Network Operator, for providing Single Sign-On services to the user.

### DETAILED DESCRIPTION OF PREFERRED EMBODIMENTS

The following describes currently preferred embodiments of a system and method for offering a user the possibility to access Single Sign-On (SSO) services in a Multinational Mobile Network Operator (MN-MNO) Service Network as well as in external Service Providers when the user is roaming among different National Network Operators (N-MNO) federated under a tightly-coupled model in said Multinational Mobile Network Operator, thus allowing Single Sign-On (SSO) services for users roaming in a packet radio network of the federation.

The present invention presents several aspects in connection with having assigned for a user of the Multinational Mobile Network Operator (MN-MNO) a Gateway GPRS Support Node (GGSN) that belongs to a visited network where the user is roaming, and such visited network being preferably in charge of performing the user access authentication.

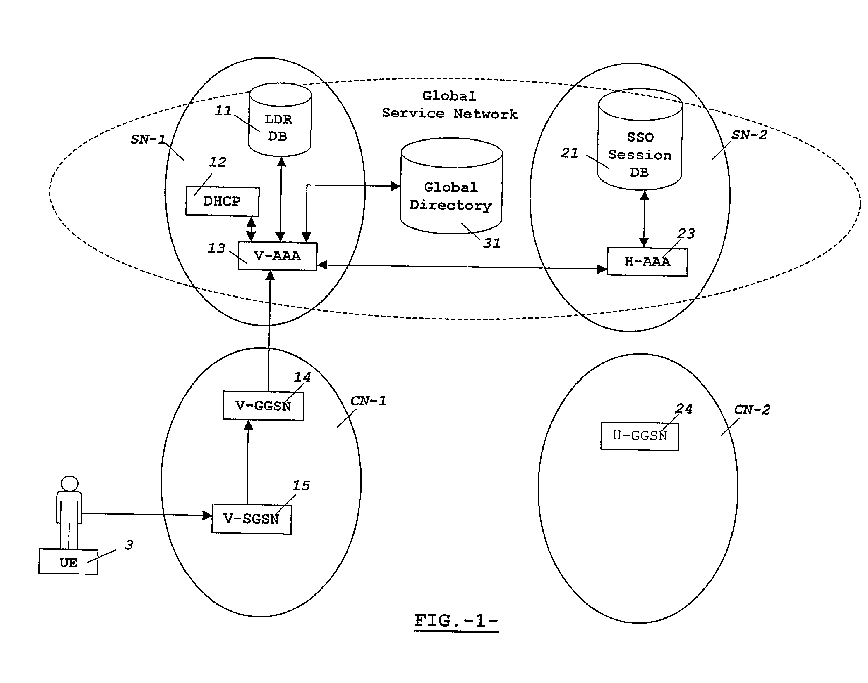

In accordance with a first aspect of the present invention, there is provided a new mechanism for providing the home network with the user's information needed to set up a user's master session. More precisely, there is provided a new mechanism for providing said user's information to a 'Home Authentication, Authorization and Accounting' (H-AAA) server in the Home Service Network from the assigned Gateway GPRS Support Node (V-GGSN) at the visited Core Network whilst ensuring that the user IP traffic is routed through the visited Service Network where the user is roaming in order to allow the user to access and execute Single Sign-On services, both 'global' services offered by said Multinational Mobile Network Operator as well as 'local' services offered by said visited National Network Operator. An overall sketch of the present solution in accordance with this first aspect of the invention is presented in Fig. 1 wherein the visited service network (SN-1) acts as a proxy for authentication, authorization and session related messages from the visited core network (CN-1) toward the home service network (SN-2).

Thus, Fig. 1 shows different players involved in a tightly-coupled scenario where a Multinational Mobile Network Operator (MN-MNO) comprises a number of federated National Network Operators (SN-1, CN-1; SN-2, CN-2).

A first player is a user (3) with a user equipment (UE) who, holding a subscription with a home network (SN-2, CN-2), wants to access services while roaming in a visited network (SN-1, CN-1).

A second player is a Visited Serving GPRS Support Node (V-SGSN) (15) which is the entity intended to resolve the Gateway GPRS Support Node assigned for the user, and thus determining a Visited Gateway GPRS Support Node (V-GGSN) (14) to be used to access a Service Network depending on an Access Point Network (APN).

A third player is the Visited Gateway GPRS Support Node (V-GGSN) (14) that is in charge of assigning an IP address to the UE (3). To achieve this, and in accordance with an embodiment of the invention, the V-GGSN (14) sends an Access Request message to a 'Visited Authentication, Authorization and Accounting' (V-AAA) server (13) in the Visited Service Network (SN-1). This Access Request includes the MSISDN, or a user directory number, as one of the message attributes.

This new player, the V-AAA (13), is in accordance with the invention responsible of assigning an IP address to the user among those IP addresses belonging to the visited network (SN-1, CN-1). Therefore, the V-AAA may use a DHCP (12) server intended for leasing IP addresses in a certain domain such as the said visited network, or might handle IP addresses assignations on its own premises. The V-AAA may be regarded for the purpose of the present invention as a proxy for authentication, authorization, session and accounting messages of a user toward a 'Home Authentication, Authorization and Accounting' (H-AAA) server (23) in the Home Service Network (SN-2) of said user. To this end, the V-AAA (13) keeps a binding of H-AAA (23) address, MSISDN and UE (3) IP address within a Local Dynamic Routing Database (LDR DB) (11). The V-AAA (13) is, in accordance with an embodiment of the present invention, also involved in creating and ending a master session for this user, however, the control of the master session is preferably carried out in the user's home service network (SN-2).

Another new player is a Global Directory (31) that cooperates with the V-AAA (13) of the visited service network (SN-1) to locate the H-AAA (23) in the user's home service network (SN-2). Physically, this Global Directory (31) may be a dedicated new entity, or may be located in a more generic Central Directory Server (CDS), or might take the form of an ENUM database, or even being implemented in an existing Service Locator Function (SLF).

A further player is the above H-AAA (23) that is responsible for keeping the user's authentication state at a service network level. Moreover, the H-AAA (23) is also in charge of handling and controlling a master session for a given user.

A still further player is a 'Single Sign-On Session Database' (SSO Session DB) (21) that is responsible for persistently storing session related information for a given user, such as a user's IP address, MSISDN, timestamp, and others.

There is provided in accordance with this first aspect of the present invention a method of offering an effective Single Sign-On authentication for users of a packet radio network roaming in a network of a Multinational Mobile Network Operator (MN-MNO) that comprises a number of National Network Operator (SN-1, CN-1; SN-2, CN-2) wherein said users hold their subscription.

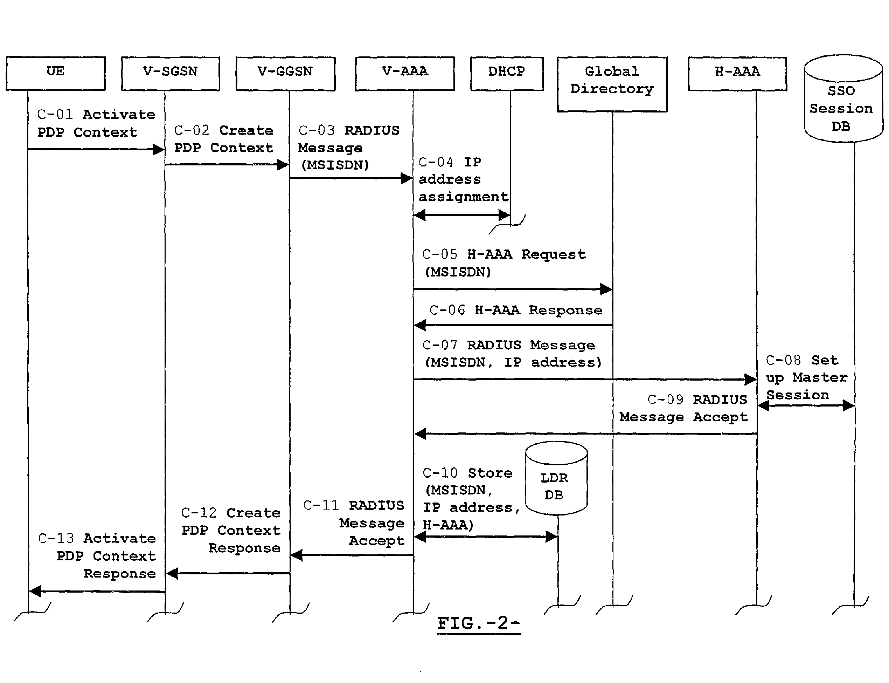

Thus, as shown in Fig. 2, a user (3) initiates a GPRS procedure for PDP context activation (C-01) toward a V-SGSN (15) in the visited network (CN-1) where the user is roaming. The V-SGSN, by resolving a unique service network related Access Point Network (APN) via for example a DNS resolution, selects a GGSN to support the creation of the PDP context. In the current scenario, the V-SGSN (15) selects a V-GGSN (14) also in the visited network (CN-1) where the user is roaming, and sends a "Create-PDP-Context" message (C-02) toward said V-GGSN (14). The V-GGSN, upon receipt of the "Create-PDP-Context" message (C-02), performs an APN authentication. To this end, the V-GGSN (14) sends (C-03) an "Access Request" or an "Accounting Start" message to the V-AAA (13). In this respect, Fig. 2 shows a more generic RADIUS message (C-03; C-07) referring indistinctly to said "Access Request" or "Accounting Start" messages. Moreover, as anyone skilled in the art may appreciate, another similar protocol such as DIAMETER, for example, could be used instead of RADIUS without substantially differing from the scope of this description.

Although from a technical point of view the V-GGSN (14) might contact the H-AAA (23) directly, this would imply the need for a point-to-point tunnel from the V-GGSN and an entry point in the home service network (SN-2) in order to be able to properly route the IP traffic from the home network to the V-GGSN. This means extra infrastructure is needed in the home service network (SN-2) and a dedicate link between both home and visited networks (SN-2, SN-1), which is not an optimal solution in most cases when several domains are involved, as described above, and for which improvement the present invention is addressed.

The V-AAA (13) then assigns an IP address (C-04) to the user by means of a DHCP server (12), or by using pools of IP addresses under its own premises.

In accordance with an embodiment of the present invention, the identity for a given user is provisioned in the H-AAA (23), together with authentication credentials for said user valid also in other scenarios, rather than in a Global Directory (31). On the other hand, and given that users are generally provisioned in a service network, a currently preferred embodiment of the present invention assumes that users are provisioned by the National Network Operator (SN-2, CN-2) where the user holds a subscription within the Multinational Mobile Network Operator (MN-MNO).

Therefore, the V-AAA (13) behaves as a proxy for the authentication process toward the H-AAA (23). To achieve this, the V-AAA is arranged to find out the H-AAA that is in charge of the user with help of the MSISDN, or any subscriber directory number, received from the V-GGSN (14). In accordance with a currently preferred embodiment this may be carried out by means of the above Global Directory (31), wherein there is a mapping between MSISDN numbers and their corresponding H-AAA servers addresses. Other embodiments of the same solution might be an ENUM database, a Service Locator Function (SLF) used in IP Multimedia networks (IPMM). For the sake of clarity, the term Global Directory is hereinafter used to refer to a physical entity arranged for storing at a Multinational Mobile Network Operator (MN-MNO) premises a correspondence between subscriber directory numbers, such as the MSISDN, and their corresponding H-AAA servers addresses.

Then, when the user is found to be roaming in the visited network (CN-1, SN-1), the V-AAA (13) queries (C-05, C-06) the Global Directory in order to locate the H-AAA in charge of said user. Once the appropriate H-AAA (23) has been identified, the V-AAA assuming a proxy behaviour sends (C-07) an "Access Request" or an "Accounting Start" message toward the H-AAA (23) including the user's IP address and MSISDN. For the sake of simplicity, such "Access Request" or "Accounting Start" messages are shown in Fig. 2 as a RADIUS message, though other preferred embodiments could be followed with corresponding messages of other protocols such as DIAMETER.

As receiving such "Access Request" or "Accounting Start" message (C-07), the H-AAA (23) checks the user's subscription data and creates a master session for said user. Then, the H-AAA stores (C-08) in a Single Sign-On Session Database (SSO Session DB) (21) of the home service network (SN-2) SSO-related data comprising the user MSISDN and IP address, the session ID, a timestamp of the applicable authentication event, and a selected authentication mechanism.

This is an important issue in accordance with the invention for achieving the SSO functionality, since this SSO Session DB (21) may be regarded as a master repository for granting the existence and trust of a previous authentication event. This information is further used to grant the user access to his home services in a tightly-coupled Multinational Mobile Network Operator (MN-MNO) scenario, as well as to generate future assertions in a federated SSO scenario.

Moreover, the master session is uniquely controlled by the home service network (SN-2) of the user. Provided that the control of sessions were distributed among the different networks of particular National Network Operators (SN-1, CN-1; SN-2, CN-2) included in a Multinational Mobile Network Operator (MN-MNO), a Global Dynamic Session Database (GDS DB) would be required in order to provide the SSO functionality. Nevertheless, such a Global Dynamic Session Database (GDS DB) may be a potential bottleneck in the system due to scalability and performance problems.

Once the master session has been created for the user (C-08), the H-AAA (23) sends back (C-09) to the V-AAA (13) a corresponding Access Request or Accounting Response acceptation. For the sake of consistency, Fig. 2 shows a RADIUS Message Accept (C-09) for referring the above Access Request or Accounting Response acceptation. The V-AAA (13) then stores (C-10) in the Local Dynamic Routing Database (LDR DB) (11) at least a binding between the user's IP address, the location or address of the H-AAA server, and the user's MSISDN. Such information further allows a complete Federated SSO solution in a MN-MNO scenario.

Further, the V-AAA (13) accepts back (C-11) the "Access Request", or the "Accounting Start", message to the sender V-GGSN (14), which in turn completes (C-12) the Creation of PDP Context Request back to the V-SGSN (15). Eventually, the V-SGSN (15) sends the Activate PDP Context Accept back (C-13) to the UE (3).

In accordance with a second aspect of the present invention, there is provided a new mechanism for supporting Federated SSO services in a tightly-coupled Multinational Mobile Network Operator (MN-MNO) scenario.

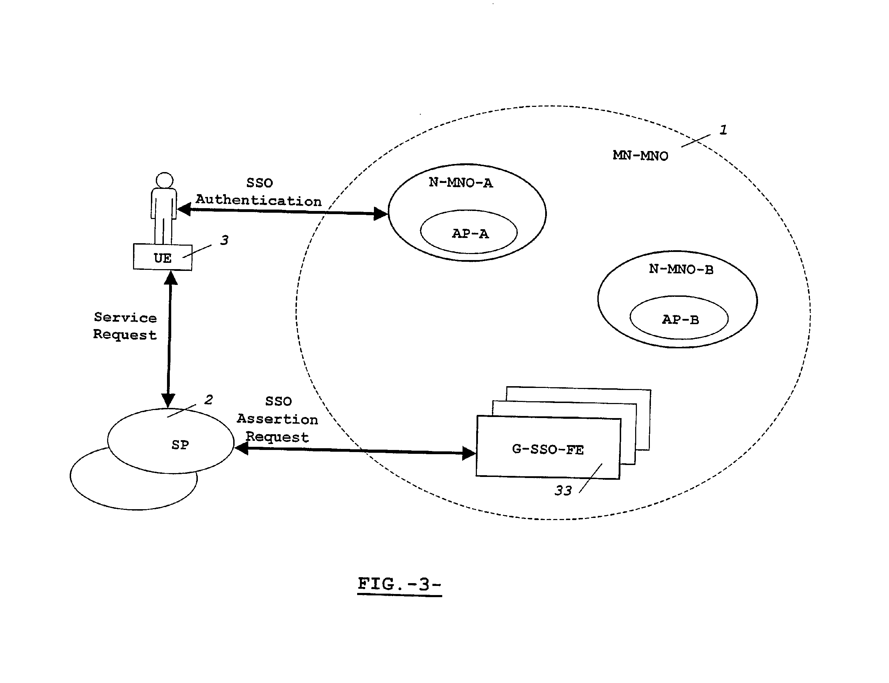

In this scenario, which is illustrated in Fig. 3, a user (3) is accessing home or external services through a web browser and, hence, when an incoming IP connection is received from the user in the Multinational Mobile Network Operator (MN-MNO) Global Service Network (1), said Global Service Network checks whether the user is trusted, that is, firstly if said user belongs to the federation, namely to said Multinational Mobile Network Operator (MN-MNO), and secondly if the user had been previously authenticated and still has an active session running. This checking and validation are preferably carried out from a user IP address of said incoming IP connection, and transparently to the user. It is assumed that an IP address is securely assigned to the UE and that an operator's internal packet switched network is also secure so that assigned IP addresses are not possible to spoof. This allows the use of a user's IP address as a user's pseudo-identity during the time such user is connected.

As commented above, a tightly-coupled model for a Multinational Mobile Network Operator (MN-MNO) assumes that there is a single logical entry point (33) for a Single Sign-On (SSO) service within the whole network owned or controlled by said Multinational Mobile Network Operator. This assumption is based on a business model in which different Service Providers (SP) (2) sign bilateral agreements with the Multinational Mobile Network Operator (MN-MNO), rather than with those local National Network Operators (N-MNO-A; N-MNO-B) comprised by said Multinational Mobile Network Operator (MN-MNO). Besides, for the Multinational Mobile Network Operator (1) is important to ease the interaction with the Service Providers (2) by offering them a simpler configuration, so that the Service Providers (SP) get an easier benefit of being partner with the Multinational Mobile Network Operator.

In this respect, this single logical entry point (33) for a Single Sign-On (SSO) service does not imply a single physical entry point, but rather each individual Service Provider (2) may actually have a different URI where the user's browser, or more generally speaking a user's agent, is redirected. Thus, a single entry point implies that a SSO service, which is intended for deciding whether or not a user is trusted, is globally used within the network owned or controlled by the Multinational Mobile Network Operator (1) and, thereby, a given Service Provider can change the physical SSO entry point (33) towards the federation while keeping the same functionality toward the user (3).

Moreover, the actual authentication is performed at the user's home network, which belongs to a particular National Network Operators (N-MNO-A), but this procedure is transparent to the Service Provider (SP). The Service Provider (2), consequently, always redirect the user to a same entry point in the federation and after having performed a number of steps, which are typically 'http' redirections, and once the browser, or user's agent, gets again to the Service Provider, the user presents a token, namely an artifact in a SAML terminology, indicating to the Service Provider where an authentication assertion was generated. Thus, the Service Provider (2) does not need be aware of the user's National Network Operators (N-MNO-A), but just contact a site where the authentication assertion was generated and check that such site is trusted. In short, this entry point (33) in the federation, namely a Global SSO Front End (G-SSO-FE) infrastructure, may be regarded as if it were an Single Sign-On service belonging to the Global Service Network infrastructure, and thus common to the whole federation.

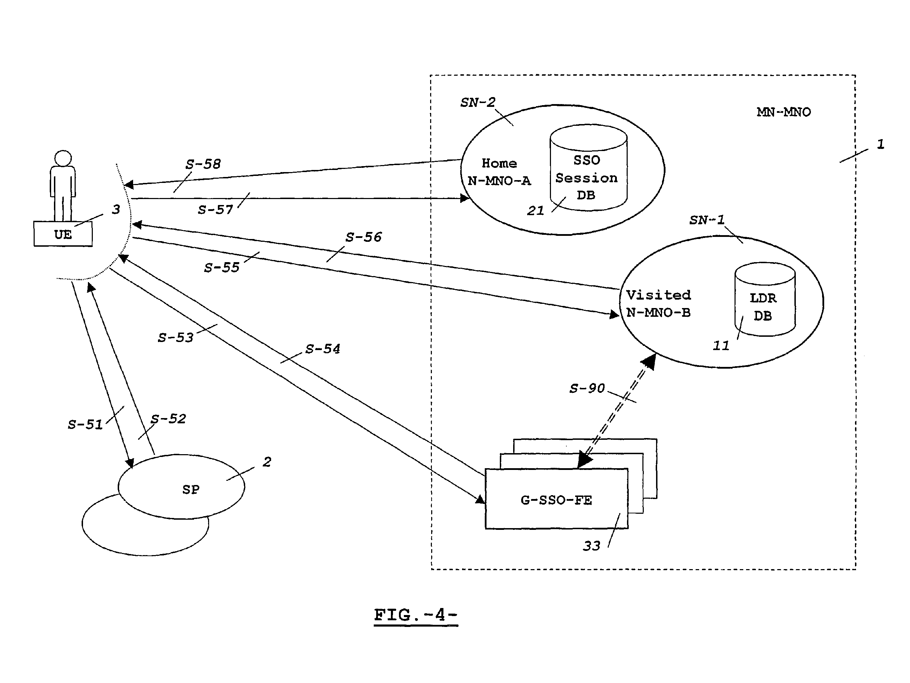

A more detailed sequence of interactions between the players in Fig. 3 is shown in Fig. 4, which following explanations refer to. An initial assumption is that a user had gained access to the packet radio network through the Multinational Mobile Network Operator (MN-MNO) core network (1).

As shown in Fig. 4, the user (3) contacts the Service Provider (2) and request (S-51) to be authenticated through a Federated Single Sign-On (F-SSO) mechanism. The user's web browser, or user's agent, is redirected (S-52, S-53) toward a single entry point in the Federation (33), namely the above Global SSO Front End (G-SSO-FE), through a single logical URI or different logical URI's. The Global SSO Front End (G-SSO-FE) (33) thus receives (S-53) an incoming IP connection and has to determine whether such user is trusted or not by checking the sender's IP address.

Logical means at said G-SSO-FE (33) invokes a 'service query' within the Global Service Network, not shown in Fig. 4, where configuration details for the MN-MNO related IP infrastructure are stored along with an IP address mapping for the different National Network Operators (N-MNO-A; N-MNO-B) in the Federation. As a result of this query, the G-SSO-FE (33) determines the visited National Network Operator (N-MNO-B) network from which the user accessed the MN-MNO network, that is, the particular National Network Operator (N-MNO-B) network that assigned the IP address currently used by the user.

The above 'service query' within the Global Service Network may be an internal consult within the G-SSO-FE (33) premises by simply analysing ranges of IP addresses in an internal database or table, or might be an external query to a Global Directory (31), the latter thus offering a more complete service as required within a tightly-coupled model for a Multinational Mobile Network Operator (MN-MNO), in accordance with a currently preferred embodiment.

Once the G-SSO-FE (33) has determined the visited National Network Operator (N-MNO-B) network, the G-SSO-FE (33) may now select to either redirect (S-54, S-55) the user's browser (3) to the visited National Network Operator (N-MNO-B) network, or request to said visited National Network Operator (N-MNO-B) network via a Back-End Protocol (S-90) the identity of the user's home National Network Operator (N-MNO-A) network.

In a currently preferred embodiment, the use of this Back-End Protocol seems better to optimize the traffic in a "front-channel" toward the user (3) that is usually a bottleneck in terms of bandwidth and reliability. Moreover, the use of this Back-End Protocol also shortens the user's login process, and therefore enhances the user experience.

Back to the procedure illustrated in Fig. 4, the visited National Network Operator (N-MNO-B) network knows the user's home National Network Operator (N-MNO-A) network thanks to a binding between the user's IP address and the H-AAA (23) that was stored in the LDR DB (11) when carrying out the authentication mechanism between both the user's home and visited networks, which was illustrated in Fig. 2, when the user first accessed the MN-MNO packet radio network.

Eventually, the user's browser (3) is redirected (S-56, S-57) to an SSO service in his home National Network Operator (N-MNO-A) network where the master session for said user is stored, either from a previous redirection (S-54, S-55) through the visited National Network Operator (N-MNO-B) network, or from the G-SSO-FE (33) thanks to the information obtained via the Back-end Protocol (S-90). The SSO service in his home National Network Operator (N-MNO-A) network can thus assure and assert the trust status of such user. If the user has an active SSO session in the SSO Session DB (21), a SAML assertion is generated to be further retrieved by the Service Provider, and the user is authenticated (S-58).

The invention is described above in respect of several embodiments in an illustrative and non-restrictive manner. Obviously, many modifications and variations of the present invention are possible in light of the above teachings. The scope of the invention is determined by the claims, and any modification of the embodiments that fall within the scope of these claims is intended to be included therein.

## Claims

1. A telecommunications system arranged for providing Single Sign-On services for a user (3) roaming in a packet radio network (CN-1, SN-1; CN-2, SN-2) of a Multinational Mobile Network Operator (MN-MNO) (1) that includes a federation of National Network Operators (N-MNO-A; N-MNO-B), one of these National Network Operators (N-MNO-A) holding the user's subscription, the telecommunications system comprising:
- a visited Gateway GPRS Support Node (V-GGSN) (14) assigned for the user at a visited packet radio network (CN-1) wherein the user is roaming, and responsible for sending user's identifiers relevant for a first user's authentication toward the user's home network; and
- a home Authentication, Authorization and Accounting (H-AAA) server (23) in the user's home service network (SN-2), responsible for maintaining a master session for the user with said user's identifiers;
- a visited Authentication, Authorization and Accounting (V-AAA) server (13) in the visited network (SN-1), acting as a proxy between the V-GGSN (14) and the H-AAA (23), and binding an H-AAA address with said user's identifiers; and
- a global Single Sign-On Front End (G-SSO-FE) infrastructure (33) intended to act as a single entry point for Single Sign-On service in the federation of National Network Operators (N-MNO-A; N-MNO-B).

2. The telecommunications system of claim 1, further comprising a Global Directory (31) of the federation of National Network Operators (N-MNO-A; N-MNO-B) cooperating with the visited Authentication, Authorization and Accounting (V-AAA) server (13) in the visited network (SN-1) wherein the user is roaming to locate the home Authentication, Authorization and Accounting (H-AAA) server (23) in the user's home service network (SN-2).

3. The telecommunications system of claim 2, wherein the Global Directory (31) is an entity arranged for storing an association between user's identifiers relevant for user's authentication and an address of a corresponding home Authentication, Authorization and Accounting (H-AAA) server (23).

4. The telecommunications system of claim 1, wherein the visited Authentication, Authorization and Accounting (V-AAA) server (13) in the visited network (SN-1) wherein the user is roaming, keeps a binding of a home Authentication, Authorization and Accounting (H-AAA) server (23) address and user's identifiers within a Local Dynamic Routing Database (LDR DB) (11).

5. The telecommunications system of claim 4, wherein said user's identifiers comprise a user directory number and an IP address assigned to the user (UE) (3).

6. The telecommunications system of claim 1, wherein the home Authentication, Authorization and Accounting (H-AAA) server (23) in the user's home service network (SN-2) maintains a master session for the user in cooperation with a Single Sign-On Session Database (SSO Session DB) (21) responsible for storing session related information comprising a user directory number, an IP address assigned to the user, an indicator of a selected authentication mechanism, and a timestamp.

7. The telecommunications system of claim 1, further comprising a number of Service Providers (2) that have signed service agreements with the federation of National Network Operators (N-MNO-A; N-MNO-B) for offering Single Sign-On services to users that are subscribers of any National Network Operator (N-MNO-A; N-MNO-B) included in the federation of National Network Operators (N-MNO-A; N-MNO-B), each Service Provider (2) comprising:
- means for redirecting a user to a global Single Sign-On Front End (G-SSO-FE) infrastructure (33) as entry point in the federation of National Network Operators (N-MNO-A; N-MNO-B);
- means for receiving a token from the user, the token being either an authentication assertion, or a reference thereof along with an indication of where such assertion was generated;
- means for retrieving an assertion from a site where the assertion was generated; and
- means for checking that such site is trusted.

8. The telecommunications system of claim 7, wherein each particular Service Provider (2) may have a different global Single Sign-On Front End (G-SSO-FE) (33) for acting as entry point in the federation of National Network Operators (N-MNO-A; N-MNO-B).

9. The telecommunications system of claim 8, wherein each particular Service Provider (2) further comprises means for changing from one global Single Sign-On Front End (G-SSO-FE) (33) to one another within the federation for acting as entry point in said federation of National Network Operators (N-MNO-A; N-MNO-B).

10. A method for providing Single Sign-On services through a number of Service Providers (2) having service agreements with a Multinational Mobile Network Operator (MN-MNO) (1) for a user (3) roaming in a packet radio network (CN-1, SN-1; CN-2, SN-2) of said Multinational Mobile Network Operator (MN-MNO) (1) that includes a federation of National Network Operators (N-MNO-A; N-MNO-B), one of these National Network Operators (N-MNO-A) holding a user's subscription, the method comprising the steps of:
(a) performing a first authentication of a user roaming in a visited packet radio network (CN-1, SN-1) toward the user's home service network (SN-2); and
(b) creating a master session at the user's home service network (SN-2) with Single Sign-On related data;
(c) redirecting a user accessing a Service Provider (2) that has a service agreement with the Multinational Mobile Network Operator (MN-MNO) (1) toward the user's home network (N-MNO-A) via a global Single Sign-On Front End (G-SSO-FE) infrastructure (33) acting as entry point in the federation of National Network Operators (N-MNO-A, N-MNO-B) for obtaining a Single Sign-On authentication assertion; and
(d) receiving a Single Sign-On authentication assertion either from the user or from an entity where such assertion was generated.

11. The method of claim 10, wherein the step b) of creating a master session at the user's home service network (SN-2) with Single Sign-On related data further includes the steps of:
- storing at a Single Sign-On Session Database (21) Single Sign-On related data comprising a session identifier, a session status, a user directory number, an IP address assigned to the user, an indicator of a selected authentication mechanism, and a timestamp of the authentication event; and
- binding at a user's visited service network (SN-1) an address of an entity handling the master session for such user at the user's home service network (SN-2), and a set of user's identifiers that includes at least a user directory number, and an IP address assigned to the user (3).

12. The method of claim 10, wherein the step a) of performing a first authentication of a user roaming in a visited packet radio network (CN-1) includes a step of assigning a visited Gateway GPRS Support Node (14) for the user at the visited packet radio network.

13. The method of claim 12, wherein the step of assigning a visited Gateway GPRS Support Node includes a step of sending user's identifiers relevant for a first user's authentication from said visited Gateway GPRS Support Node (14) toward a home Authentication, Authorization and Accounting server (23) in the user's home service network (SN-2) for maintaining a user's master session.

14. The method of claim 13, wherein the step of sending user's identifiers includes a step of interposing a visited Authentication, Authorization and Accounting server (13) in the visited network (SN-1), acting as a proxy between said visited Gateway GPRS Support Node (14) and the home Authentication, Authorization and Accounting server (23) in user's home network (SN-2).

15. The method of claim 10, wherein the step c) of redirecting a user toward the user's home network (N-MNO-A) via a global Single Sign-On Front End (G-SSO-FE) infrastructure (33) comprises the steps of:
(c1) determining a visited network (N-MNO-B) which assigned the current IP address to the user when accessing a network of the federation of National Network Operators (N-MNO-A; N-MNO-B); and
(c2) obtaining from the visited network (N-MNO-B) an address of an entity handling a user's master session in the user's home service network (SN-2).

16. The method of claim 15, wherein the step c2) of obtaining an address of an entity handling the master session for such user includes a step of redirecting (S-54, S-55) the user toward the currently visited network (N-MNO-B).

17. The method of claim 15, wherein the step c2) of obtaining an address of an entity handling the master session for such user includes a step of requesting such address from the global Single Sign-On Front End (33) toward the visited network (N-MNO-B) by using a Back-End protocol (S-90).

18. The method of claim 15, wherein the step c1) of determining the visited network (N-MNO-B) includes a step of querying a Global Directory (31) about the National Network Operator in charge of assigning a given user's IP address.

19. The method of claim 10, wherein the step d) of receiving a Single Sign-On authentication assertion from the entity where such assertion was generated includes the steps of:
- receiving from the user a reference to said assertion along with an address of such entity; and
- validating the assertion with the entity having generated the assertion.

## Patentansprüche

1. Telekommunikationssystem, das zum Bereitstellen von Single-Sign-On-Diensten für einen Benutzer (3), der in einem Paketfunknetz (CN-1, SN-1; CN-2, SN-2) eines multinationalen Mobilnetzbetreibers (MN-MNO) von nationalen Netzbetreibern (N-MNO-A; N-MNO-B) roamt, der einen Verband nationaler Netzbetreiber (N-MNO-A; N-MNO-B) umfasst, eingerichtet ist, wobei einer dieser nationalen Netzbetreiber (N-MNO-A) eine Subskription des Benutzers innehat, wobei das Telekommunikationssystem Folgendes umfasst:
- einen besuchten Gateway-GPRS-Unterstützungsknoten (visited Gateway GPRS Support Node, V-GGSN) (14), der dem Benutzer in einem besuchten Paketfunknetz (CN-1), in dem der Benutzer roamt, zugeordnet wird und der für das Senden von Kennungen des Benutzers verantwortlich ist, die für eine erste Authentifizierung des Benutzers gegenüber dem Heimatnetz des Benutzers relevant sind; und
- einen Heimat-Authentifizierungs-, Autorisierungs- und Abrechnungsserver (Home Authentication, Authorization und Accounting server, HAAA-Server) (23) in dem Heimatdienstnetz (SN-2) des Benutzers, der für das Aufrechterhalten einer Master-Sitzung für den Benutzer mit den Kennungen des Benutzers verantwortlich ist;
- einen besuchten Authentifizierungs-, Autorisierungs- und Abrechnungsserver (visited Authentication, Authorization und Accounting server, VAAA-Server) (13) in dem besuchten Netz (SN-1), der als ein Proxy zwischen dem V-GGSN (14) und dem HAAA (23) fungiert und eine HAAA-Adresse mit den Kennungen des Benutzers bindet; und
- eine globale Single-Sign-On-Frontend-Infrastruktur (G-SSO-FE-Infrastruktur) (33), die als ein einziger Eintrittspunkt für einen Single-Sign-On-Dienst in dem Verband nationaler Netzbetreiber (N-MNO-A; N-MNO-B) fungieren soll.

2. Telekommunikationssystem nach Anspruch 1, das weiterhin ein globales Verzeichnis (31) des Verbands nationaler Netzbetreiber (N-MNO-A; N-MNO-B) umfasst, das mit dem besuchten Authentifizierungs-, Autorisierungs- und Abrechnungsserver (VAAA-Server) (13) in dem besuchten Netz (SN-1), in dem der Benutzer roamt, kooperiert, um den Heimat-Authentifizierungs-, Autorisierungs- und Abrechnungsserver (HAAA-Server) (23) in dem Heimatdienstnetz (SN-2) des Benutzers zu lokalisieren.

3. Telekommunikationssystem nach Anspruch 2, wobei das globale Verzeichnis (31) eine Entität ist, die zum Speichern einer Assoziation zwischen Kennungen des Benutzers, die zur Authentifizierung des Benutzers relevant sind, und einer Adresse eines entsprechenden Heimat-Authentifizierungs-, Autorisierungs- und Abrechnungsservers (HAAA-Servers) (23) eingerichtet ist.

4. Telekommunikationssystem nach Anspruch 1, wobei der besuchte Authentifizierungs-, Autorisierungs- und Abrechnungsserver (VAAA-Server) (13) in dem besuchten Netz (SN-1), in dem der Benutzer roamt, eine Bindung einer Adresse des Heimat-Authentifizierungs-, Autorisierungs- und Abrechnungsservers (HAAA-Servers) (23) und Kennungen des Benutzers in einer lokalen dynamischen Routing-Datenbank (LDR DB) (11) bewahrt.

5. Telekommunikationssystem nach Anspruch 4, wobei die Kennungen des Benutzers eine Benutzerverzeichnisnummer und eine IP-Adresse, die dem Benutzer (UE) (3) zugeordnet wurde, umfassen.

6. Telekommunikationssystem nach Anspruch 1, wobei der Heimat-Authentifizierungs-, Autorisierungs- und Abrechnungsserver (HAAA-Server) (23) in dem Heimatdienstnetz (SN-2) des Benutzers eine Master-Sitzung für den Benutzer in Kooperation mit einer Single-Sign-On-Sitzungsdatenbank (SSO-Sitzungs-DB) (21), die für das Speichern von mit der Sitzung zusammenhängenden Informationen, die eine Benutzerverzeichnisnummer, eine IP-Adresse, die dem Benutzer zugeordnet wurde, eine Anzeige eines ausgewählten Authentifizierungsmechanismus und einen Zeitstempel umfassen, verantwortlich ist, aufrechterhält.

7. Telekommunikationssystem nach Anspruch 1, das weiterhin eine Anzahl Dienstanbieter (2) umfasst, die mit dem Verband nationaler Netzbetreiber (N-MNO-A; N-MNO-B) Dienstvereinbarungen zum Anbieten von Single-Sign-On-Diensten an Benutzer, die Teilnehmer eines beliebigen nationalen Netzbetreibers (N-MNO-A; N-MNO-B) sind, die von dem Verband nationaler Netzbetreiber (N-MNO-A; N-MNO-B) umfasst werden, unterzeichnet haben, wobei jeder Dienstanbieter (2) Folgendes umfasst:
- Mittel zum Umleiten eines Benutzers zu einer globalen Single-Sign-On-Frontend-Infrastruktur (G-SSO-FE-Infrastruktur) (33) als Eintrittspunkt in dem Verband nationaler Netzbetreiber (N-MNO-A; N-MNO-B);
- Mittel zum Empfangen eines Tokens von dem Benutzer, wobei das Token entweder eine Authentifizierungskontrollaussage oder ein Verweis darauf, zusammen mit einer Anzeige, wo eine solche Kontrollaussage erzeugt wurde, ist;
- Mittel zum Abrufen einer Kontrollaussage von einer Site, an der die Kontrollaussage erzeugt wurde; und
- Mittel zum Überprüfen, ob eine solche Site vertrauenswürdig ist.

8. Telekommunikationssystem nach Anspruch 7, wobei jeder bestimmte Dienstanbieter (2) ein anderes globales Single-Sign-On-Frontend (G-SSO-FE) (33) zum Fungieren als Eintrittspunkt in dem Verband nationaler Netzbetreiber (N-MNO-A; N-MNO-B) aufweist.

9. Telekommunikationssystem nach Anspruch 8, wobei jeder bestimmte Dienstanbieter (2) weiterhin Mittel zum Wechseln von einem globalen Single-Sign-On-Frontend (G-SSO-FE) (33) zu einem anderen innerhalb des Verbands zum Fungieren als Eintrittspunkt in dem Verband nationaler Netzbetreiber (N-MNO-A; N-MNO-B) umfasst.

10. Verfahren zum Bereitstellen von Single-Sign-On-Diensten über eine Anzahl von Dienstanbietern (2) mit Dienstvereinbarungen mit einem multinationalen Mobilnetzbetreiber (MN-MNO) von nationalen Netzbetreibern (N-MNO-A; N-MNO-B) für einen Benutzer (3), der in einem Paketfunknetz (CN-1, SN-1; CN-2, SN-2) des multinationalen Mobilnetzbetreibers (MN-MNO) von nationalen Netzbetreibern (N-MNO-A; N-MNO-B) roamt, der einen Verband nationaler Netzbetreiber (N-MNO-A; N-MNO-B) umfasst, wobei einer dieser nationalen Netzbetreiber (N-MNO-A) eine Subskription des Benutzers innehat, wobei das Verfahren die folgenden Schritte umfasst:
(a) Durchführen einer ersten Authentifizierung eines Benutzers, der in einem besuchten Paketfunknetz (CN-1, SN-1) roamt, gegenüber dem Heimatdienstnetz (SN-2) des Benutzers; und
(b) Erstellen einer Master-Sitzung in dem Heimatdienstnetz (SN-2) des Benutzers mit Daten, die mit Single Sign-On zusammenhängen;
(c) Umleiten eines Benutzers, der auf einen Dienstanbieter (2) zugreift, der mit dem multinationalen Mobilnetzbetreiber (MN-MNO) von nationalen Netzbetreibern (N-MNO-A; N-MNO-B) eine Dienstvereinbarung hat, in Richtung des Heimatnetzes (N-MNO-A) des Benutzers mittels einer globalen Single-Sign-On-Frontend-Infrastruktur (G-SSO-FE-Infrastruktur) (33), die als Eintrittspunkt in dem Verband nationaler Netzbetreiber (N-MNO-A; N-MNO-B) zum Erlangen einer Single-Sign-On-Authentifizierungskontrollaussage fungiert; und
(d) Empfangen einer Single-Sign-On-Authentifizierungskontrollaussage entweder von dem Benutzer oder von einer Entität, an der eine solche Kontrollaussage erzeugt wurde.

11. Verfahren nach Anspruch 10, wobei der Schritt b) des Erstellens einer Master-Sitzung in dem Heimatdienstnetz (SN-2) des Benutzers mit Daten, die mit Single Sign-On zusammenhängen, weiterhin die folgenden Schritte beinhaltet:
- Speichern, in einer Single-Sign-On-Sitzungsdatenbank (21), von Daten, die mit Single Sign-On zusammenhängen und eine Sitzungskennung, einen Sitzungsstatus, eine Benutzerverzeichnisnummer, eine IP-Adresse, die dem Benutzer zugeordnet wurde, eine Anzeige eines ausgewählten Authentifizierungsmechanismus und einen Zeitstempel des Authentifizierungsereignisses umfassen; und
- Binden, in einem besuchten Dienstnetz (SN-1) des Benutzers, einer Adresse einer Entität, die die Master-Sitzung für einen solchen Benutzer in dem Heimatdienstnetz (SN-2) des Benutzers abwickelt, und eines Satzes von Kennungen des Benutzers, der mindestens eine Benutzerverzeichnisnummer und eine IP-Adresse, die dem Benutzer (3) zugeordnet wurde, beinhaltet.

12. Verfahren nach Anspruch 10, wobei der Schritt a) des Durchführens einer ersten Authentifizierung eines Benutzers, der in einem besuchten Paketfunknetz (CN-1) roamt, einen Schritt des Zuordnens eines besuchten Gateway-GPRS-Unterstützungsknoten (14) für den Benutzer in dem besuchten Paketfunknetz beinhaltet.

13. Verfahren nach Anspruch 12, wobei der Schritt des Zuordnens eines besuchten Gateway-GPRS-Unterstützungsknoten einen Schritt des Sendens von Kennungen des Benutzers, die für eine erste Authentifizierung des Benutzers relevant sind, von dem besuchten Gateway-GPRS-Unterstützungsknoten (14) in Richtung eines Heimat-Authentifizierungs-, Autorisierungs- und Abrechnungsservers (23) in dem Heimatdienstnetz (SN-2) des Benutzers zum Aufrechterhalten einer Master-Sitzung des Benutzers beinhaltet.

14. Verfahren nach Anspruch 13, wobei der Schritt des Sendens von Kennungen des Benutzers einen Schritt des Zwischenschaltens eines besuchten Authentifizierungs-, Autorisierungs- und Abrechnungsservers (13) in dem besuchten Netz (SN-1) beinhaltet, der als ein Proxy zwischen dem besuchten Gateway-GPRS-Unterstützungsknoten (14) und dem Heimat-Authentifizierungs-, Autorisierungs- und Abrechnungsserver (23) in dem Heimatnetz (SN-2) des Benutzers fungiert.

15. Verfahren nach Anspruch 10, wobei der Schritt c) des Umleitens eines Benutzers in Richtung des Heimatnetzes (N-MNO-A) des Benutzers mittels einer globalen Single-Sign-On-Frontend-Infrastruktur (G-SSO-FE-Infrastruktur) (33) die folgenden Schritte umfasst:
(c1) Bestimmen eines besuchten Netzes (N-MNO-B), das dem Benutzer bei Zugriff auf ein Netz des Verbands nationaler Netzbetreiber (N-MNO-A; N-MNO-B) die aktuelle IP-Adresse zuordnete; und
(c2) Beziehen einer Adresse einer Entität, die eine Master-Sitzung des Benutzers in dem Heimatdienstnetz (SN-2) des Benutzers abwickelt, von dem besuchten Netz (N-MNO-B).

16. Verfahren nach Anspruch 15, wobei der Schritt c2) des Beziehens einer Adresse einer Entität, die die Master-Sitzung für einen solchen Benutzer abwickelt, einen Schritt des Umleitens (S-54, S-55) des Benutzers in Richtung des gegenwärtig besuchten Netzes (N-MNO-B) beinhaltet.

17. Verfahren nach Anspruch 15, wobei der Schritt c2) des Beziehens einer Adresse einer Entität, die die Master-Sitzung für einen solchen Benutzer abwickelt, einen Schritt des Anforderns einer solchen Adresse von dem globalen Single-Sign-On-Frontend (33) gegenüber dem besuchten Netz (N-MNO-B) unter Verwendung eines Backend-Protokolls (S-90) beinhaltet.

18. Verfahren nach Anspruch 15, wobei der Schritt c1) des Bestimmens des besuchten Netzes (N-MNO-B) einen Schritt des Abfragens eines globalen Verzeichnisses (31) zu dem nationalen Netzbetreiber, der für das Zuordnen einer IP-Adresse eines gegebenen Benutzers verantwortlich ist, beinhaltet.

19. Verfahren nach Anspruch 10, wobei der Schritt d) des Empfangens einer Single-Sign-On-Authentifizierungskontrollaussage von der Entität, an der eine solche Kontrollaussage erzeugt wurde, die folgenden Schritte beinhaltet:
- Empfangen eines Verweises auf die Kontrollaussage, zusammen mit einer Adresse einer solchen Entität, von dem Benutzer und
- Validieren der Kontrollaussage mit der Entität, die die Kontrollaussage erzeugt hat.

## Revendications

1. Système de télécommunications agencé afin de fournir des services de signature automatique pour un utilisateur (3) se déplaçant de manière itinérante dans un réseau radio à paquets (CN-1,SN-1 ;CN-2,SN-2) d'un opérateur de réseau mobile multinational (MN-MNO) (1) qui inclut une fédération d'opérateur de réseaux nationaux (N-MNO-A ; N-MNO-B), un de ces opérateurs de réseaux nationaux (N-MNO-A) détenant l'abonnement de l'utilisateur, le système de télécommunication comprenant :
- un noeud de support GPRS de transit visité (V-GGSN) (14) assigné à l'utilisateur dans un réseau radio à paquets visité (CN-1) dans lequel l'utilisateur se déplace de manière itinérante et en charge de l'envoi des identifiants d'utilisateur pertinents pour l'authentification d'un premier utilisateur par rapport au réseau de rattachement de l'utilisateur ; et
- un serveur d'authentification, d'autorisation et de comptabilisation de rattachement (H-AAA) (23) dans le réseau de desserte de rattachement de l'utilisateur (SN-2), en charge de conserver une session maître pour l'utilisateur avec lesdits identifiants d'utilisateur ;
- un serveur d'authentification, d'autorisation et de comptabilisation visité (V-AAA) (13) dans le réseau visité (SN-1), agissant comme un mandataire entre le V-GGSN (14) et le H-AAA(23) et reliant une adresse de H-AAA aux identifiants dudit utilisateur ; et
- une infrastructure de frontal de signature automatique global (G-SSO-FE) (33) encline à agir comme un point d'entrée unique pour un service de signature automatique dans la fédération d'opérateurs de réseaux nationaux (N-MNO-A ;N-MNO-B).

2. Système de télécommunication selon la revendication 1, comprenant en outre un annuaire global (31) de la fédération d'opérateurs de réseaux nationaux (N-MNO-A ;N-MNO-B) coopérant avec le serveur d'authentification, d'autorisation et de comptabilisation (V-AAA)(13) dans le réseau visité (SN-1) dans lequel l'utilisateur se déplace de manière itinérante afin de localiser le serveur d'authentification, d'autorisation et de comptabilisation de rattachement (H-AAA)(23) dans le réseau de desserte de rattachement de l'utilisateur (SN-2).

3. Système de télécommunication de la revendication 2, dans lequel l'annuaire global (31) est une entité agencée afin de mémoriser une association entre des identifiants d'utilisateur pertinents pour l'authentification de l'utilisateur et une adresse d'un serveur correspondant d'authentification, d'autorisation et de comptabilisation de rattachement (H-AAA) (23) .

4. Système de télécommunication selon la revendication 1, dans lequel le serveur d'authentification, d'autorisation et de comptabilisation visité (V-AAA)(13) dans le réseau visité (SN-1) dans lequel l'utilisateur se déplace de manière itinérante, conserve une liaison d'une adresse d'un serveur d'authentification, d'autorisation et de comptabilisation de rattachement (H-AAA)(23) et d'identifiants d'utilisateur à l'intérieur d'une base de donnés de routage dynamique locale (LDR DB)(11).

5. Système de télécommunication selon la revendication 4, dans lequel lesdits identifiants d'utilisateur comprennent un numéro d'annuaire d'utilisateur et une adresse IP assignée à l'utilisateur (UE) (3).

6. Système de télécommunication selon la revendication 1, dans lequel le serveur d'authentification, d'autorisation et de comptabilisation de rattachement (H-AAA)(23) dans le réseau de desserte de rattachement de l'utilisateur (SN-2) conserve une session maître pour l'utilisateur en coopération avec une base de données de session de signature automatique (SSO session DB)(21) en charge de la mémorisation des informations relatives à la session comprenant un numéro d'annuaire d'utilisateur, une adresse IP assignée à l'utilisateur, un indicateur d'un mécanisme d'authentification sélectionné et un pointeur temporel.

7. Système de télécommunication selon la revendication 1, comprenant en outre un certain nombre de fournisseurs de service (2) qui ont signé des accords de service avec la fédération d'opérateurs de réseaux nationaux (N-MNO-A ;N-MNO-B) afin d'offrir des services de signature automatique aux utilisateurs qui sont abonnés à n'importe quel opérateur de réseau national (N-MNO-A ;N-MNO-B) inclus dans la fédération d'opérateurs de réseaux nationaux (N-MNO-A ;N-MNO-B), chaque fournisseur de service (2) comprenant :
- un moyen de redirection d'un utilisateur vers une infrastructure de frontal de signature automatique global (G-SSO-FE)(33) en tant que point d'entrée dans la fédération d'opérateurs de réseaux nationaux (N-MNO-A ;N-MNO-B) ;
- un moyen de réception d'un jeton provenant de l'utilisateur, le jeton étant soit une assertion d'authentification, soit une référence de celle-ci conjointement à une indication de l'emplacement où une telle assertion a été générée ;
- un moyen d'extraction d'une assertion d'un site où l'assertion a été générée ; et
- un moyen de vérification qu'un tel site est de confiance.

8. Système de télécommunication selon la revendication 7, dans lequel chaque fournisseur de service particulier (2) peut avoir un frontal de signature automatique global (G-SSO-FE)(33) différent afin d'agir comme un point d'entrée dans la fédération d'opérateurs de réseaux nationaux (N-MNO-A ;N-MNO-B).

9. Système de télécommunication selon la revendication 8, dans lequel chaque fournisseur de service particulier (2) comprend en outre un moyen de modification d'un frontal de signature automatique global (G-SSO-FE)(33) en un autre à l'intérieur de la fédération afin d'agir comme un point d'entrée dans ladite fédération d'opérateurs de réseaux nationaux (N-MNO-A ;N-MNO-B).

10. Procédé de fourniture de services de signature automatique via un certain nombre de fournisseurs de service (2) ayant des accords de service avec un opérateur de réseau mobile multinational (MN-MNO) d'opérateurs de réseaux nationaux (N-MNO-A ;N-MNO-B) pour un utilisateur (3) se déplaçant de manière itinérante dans un réseau radio à paquets (CN-1,SN-1 ;CN-2,SN-2) dudit opérateur de réseau mobile multinational (MN-MNO) d'opérateurs de réseaux nationaux (N-MNO-A ;N-MNO-B) qui inclut une fédération d'opérateurs de réseaux nationaux (N-MNO-A ;N-MNO-B) détenant un abonnement d'utilisateur, le procédé comprenant les étapes consistant à :
(a) effectuer une première authentification d'un utilisateur se déplaçant de manière itinérante dans un réseau radio à paquets visité (CN-1,SN-1) par rapport au réseau de desserte de rattachement de l'utilisateur (SN-2) ; et
(b) créer une session maître au niveau du réseau de desserte de rattachement de l'utilisateur (SN-2) avec des données relatives à la signature automatique ;
(c) rediriger un utilisateur accédant à un fournisseur de service (2) qui a un accord de service avec l'opérateur de réseau mobile multinational (MN-MNO) d'opérateurs de réseaux nationaux (N-MNO-A ;N-MNO-B) vers le réseau de rattachement de l'utilisateur (N-MNO-A) via une infrastructure de frontal de signature automatique global (G-SSO-FE)(33) agissant comme un point d'entrée dans la fédération d'opérateurs de réseaux nationaux (N-MNO-A ;N-MNO-B) afin d'obtenir une assertion d'authentification de signature automatique ; et
(d) recevoir une assertion d'authentification de signature automatique provenant soit de l'utilisateur, soit d'une entité où une telle assertion a été générée.

11. Procédé selon la revendication 10, dans lequel l'étape b) consistant à créer une session maître au niveau du réseau de desserte de rattachement de l'utilisateur (SN-2) avec des données relatives à la signature automatique inclut en outre les étapes consistant à :
- mémoriser dans une base de données de session de signature automatique (21) des données relatives à la signature automatique comprenant un identifiant de session, un statut de session, un numéro d'annuaire d'utilisateur, une adresse IP assignée à l'utilisateur, un indicateur d'un mécanisme d'authentification sélectionné et un pointeur temporel de l'évènement d'authentification ; et
- relier dans un réseau de desserte visité de l'utilisateur (SN-1) une adresse d'une entité gérant la session maître pour un tel utilisateur dans le réseau de desserte de rattachement de l'utilisateur (SN-2) et un jeu d'identifiants d'utilisateur qui inclut au moins un numéro d'annuaire d'utilisateur, et une adresse IP assignée à l'utilisateur (3).

12. Procédé selon la revendication 10, dans lequel l'étape a) consistant à effectuer une première authentification d'un utilisateur se déplaçant de manière itinérante dans un réseau radio à paquets visité (CN-1) inclut une étape d'assignation d'un noeud de support GPRS de transit visité (14) de l'utilisateur dans le réseau radio à paquets visité.

13. Procédé selon la revendication 12, dans lequel l'étape d'assignation d'un noeud de support GPRS de transit visité inclut une étape d'envoi des identifiants d'utilisateur pertinents pour l'authentification d'un premier utilisateur dudit noeud de support GPRS de passerelle visité (14) vers un serveur d'authentification, d'autorisation et de comptabilisation de rattachement (23) dans le réseau de desserte de rattachement de l'utilisateur (SN-2) afin de conserver une session maître de l'utilisateur.

14. Procédé selon la revendication 13, dans lequel l'étape d'envoi des identifiants d'utilisateur inclut une étape d'interposition d'un serveur d'authentification, d'autorisation et de comptabilisation visité (13) dans le réseau visité (SN-1) agissant comme un mandataire entre ledit noeud de support GPRS de transit visité (14) et le serveur d'authentification, d'autorisation et de comptabilisation de rattachement (23) dans le réseau de rattachement de l'utilisateur (SN-2).

15. Procédé selon la revendication 10, dans lequel l'étape c) consistant à rediriger un utilisateur vers le réseau de rattachement de l'utilisateur (N-MNO-A) via une infrastructure de frontal de signature automatique global (G-SSO-FE)(33) comprend les étapes consistant à:
(c1) déterminer un réseau visité (N-MNO-B) qui a assigné l'adresse IP actuelle à l'utilisateur lors de l'accès à un réseau de la fédération d'opérateurs de réseau nationaux (N-MNO-A ;N-MNO-B) (1) ;et
(c2) obtenir du réseau visité (N-MNO-B) une adresse d'une entité gérant une session maître de l'utilisateur dans le réseau de desserte de rattachement de l'utilisateur(SN-2).

16. Procédé selon la revendication 15, dans lequel l'étape c2) consistant à obtenir une adresse d'une entité gérant la session maître pour un tel utilisateur inclut une étape de redirection (S-54, S-55) de l'utilisateur vers le réseau actuellement visité (N-MNO-B).

17. Procédé selon la revendication 15, dans lequel l'étape c2) consistant à obtenir une adresse d'une entité gérant la session maître pour un tel utilisateur inclut une étape de demande d'une telle adresse au frontal de signature automatique global (33) vers le réseau visité (N-MNO-B) en utilisant un protocole d'extrémité finale (S-90).

18. Procédé selon la revendication 15, dans lequel l'étape c1) de détermination du réseau visité (N-MNO-B) inclut une étape d'interrogation d'un annuaire global (31) au sujet de l'opérateur de réseau national en charge de l'assignation d'une adresse IP d'utilisateur donnée.

19. Procédé selon la revendication 10, dans lequel l'étape d) de réception d'une assertion d'authentification de signature automatique en provenance de l'entité où une telle assertion a été générée inclut les étapes consistant à :
- recevoir de l'utilisateur une référence à ladite assertion conjointement à une adresse d'une telle entité ; et
- valider l'assertion avec l'entité ayant généré l'assertion.
